(19) Europäisches Patentamt
European Patent Office
Office européen des brevets

(11) **EP 4 164 110 A1**

(12) **EUROPÄISCHE PATENTANMELDUNG**

(43) Veröffentlichungstag:
    **12.04.2023 Patentblatt 2023/15**

(21) Anmeldenummer: **22020422.6**

(22) Anmeldetag: **01.09.2022**

(51) Internationale Patentklassifikation (IPC):
    ***H02M 7/483*** *(2007.01)*

(52) Gemeinsame Patentklassifikation (CPC):
    **H02M 7/483;** H02M 7/4833

(84) Benannte Vertragsstaaten:
    **AL AT BE BG CH CY CZ DE DK EE ES FI FR GB
    GR HR HU IE IS IT LI LT LU LV MC MK MT NL NO
    PL PT RO RS SE SI SK SM TR**
    Benannte Erstreckungsstaaten:
    **BA ME**
    Benannte Validierungsstaaten:
    **KH MA MD TN**

(30) Priorität: **06.10.2021 DE 102021125899
    25.04.2022 DE 102022109827**

(71) Anmelder: **Dr. Ing. h.c. F. Porsche
    Aktiengesellschaft
    70435 Stuttgart (DE)**

(72) Erfinder:
    • **Specht, Eduard
      76646 Bruchsal (DE)**
    • **Merz, Tobias
      76131 Karlsruhe (DE)**
    • **Hellmann, Nils
      76761 Rülzheim (DE)**

(54) **VERFAHREN UND SYSTEM FÜR EINE ZIELSTROMMODULATION EINES MODULAREN MULTILEVELUMRICHTERS**

(57) Die Erfindung betrifft ein Verfahren zur Ansteuerung eines modularen Multilevelumrichters für eine Last, bspw. einen Traktionsmotor eines Fahrzeuges. Basierend auf zu jedem Schalttakt von einer Regelung bereitgestellten Sollspannungsleveln (105) und einem Phasenwinkel der Motorphasenströme (106) wird einerseits eine effizienzoptimierte Idealstromaufteilung (210) ermittelt, andererseits unter zusätzlicher Berücksichtigung von Ladezuständen der einzelnen Module eine ladezustandsausgleichende Offsetstromfestlegung (220) ermittelt. Durch Aufsummieren der effizienzoptimierten Idealstromaufteilung (210) und der ladezustandsausgleichenden Offsetstromfestlegung (220) wird eine Zielmodulstromaufteilung (240) ermittelt, und auf Grundlage der Zielmodulstromaufteilung (240) werden Schaltbefehle (109) zur Ansteuerung des Multilevelumrichters ermittelt. Zusätzlich wird ein System beansprucht, welches eine Ausführung des Verfahrens erlaubt.

**Fig. 2**

**Beschreibung**

Die vorliegende Erfindung betrifft ein Verfahren zur Ansteuerung eines modularen Multilevelumrichters für eine Wechselstromlast. Ferner wird ein Steuerungssystem beansprucht, welches eine Ausführung des Verfahrens erlaubt.

Ein modularer Multilevelumrichter bzw. Multilevelkonverter ist eine Anordnung mehrerer elektrisch verbundener Module, die jeweils mindestens einen Energiespeicher und mehrere Halbleiterschalter zu einer dynamischen Verschaltung der Energiespeicher zwischen den Modulen aufweisen. Durch die Verschaltung kann aus einer Gleichspannung der Energiespeicher eine Wechselspannung bspw. zum Betreiben einer elektrischen Maschine erzeugt werden. Als Beispiel ist der von R. Marquardt in der Druckschrift US 2018/0109202 beschriebene modulare Multilevelumrichter zu nennen, welcher auch als MMC oder M2C abgekürzt wird.

Eine spezielle Weiterentwicklung des MMC stellt der modulare Multilevel-Seriell-Parallel-Umrichter dar, bspw. offenbart in "Goetz, S.M.; Peterchev, A.V.; Weyh, T., "Modular Multilevel Converter With Series and Parallel Module Connectivity: Topology and Control," Power Electronics, IEEE Transactions on , vol.30, no.1, pp.203,215, 2015. doi: 10.1109/TPEL.2014.2310225. Dieser wird auch als MMSPC oder M2SPC bezeichnet und weist gegenüber dem MMC die Fähigkeit auf, die Energiespeicher der Module auch parallel verschalten zu können. Auch der M2SPC erzeugt Spannungsdifferenzen zwischen mindestens zwei Anschlussterminals, bspw. eines Energienetzes oder eines Traktionssystems eines Elektroautos, durch eine Konfiguration der elektrischen Verschaltung von Energiespeichern in den Modulen und durch eine Schaltmodulation zwischen Schaltzuständen. Dadurch ist es möglich, zur Erzeugung der gewünschten Ausgangsspannung eine Vielzahl von Zwischenzuständen zu bilden.

Problematisch ist, aus der Vielzahl der möglichen Schaltzustände diejenigen herauszufinden, welche bzgl. vorgegebener Kriterien, wie bspw. eine die Energiespeicher schonende Leistungsentnahme, eine optimale Lösung darstellen. Zudem muss zu jedem Schalttakt, also in Realzeit, diese Lösung vorliegen.

Die Druckschrift DE 10 2011 075 429 A1 beschreibt ein batterieelektrisches KFZ-Antriebssystem mit mehreren Batteriemodulen, einem elektrischen Traktionsmotor und einem Multilevel-Umrichter. Der Multilevel-Umrichter kann dergestalt angesteuert werden, dass eine gleichmäßige Entladung der Batteriemodule stattfindet.

Die Druckschrift DE 10 2016 125 720 A1 offenbart ein modulares Energiespeicher-Umrichtersystem mit einer Steuereinrichtung, die dazu eingerichtet ist, Schalter in Abhängigkeit von einem aktuellen Ladezustand von Speicherelementen anzusteuern. Damit können vor einem Parallelschalten der Speicherelemente die Spannungen oder Ladezustände der Speichermodule angeglichen werden.

In der US-amerikanischen Druckschrift US 2021/0155100 A1 wird ein Verfahren zur Vorhersage von Phasenverschiebungen von Strömen auf einer Primär- und einer Sekundärseite des Umrichters beschrieben. Verluste in der Leistungselektronik lassen sich dadurch minimieren.

Vor diesem Hintergrund ist es eine Aufgabe der vorliegenden Erfindung, ein Verfahren für die Ansteuerung eines modularen Multilevelumrichters zur Verfügung zu stellen, welches in Echtzeit gemäß vorgegebener Optimierungskriterien einen jeweiligen Schaltzustand für die Module des modularen Multilevelumrichters generiert. Ferner soll ein System beansprucht werden, welches eine Ausführung des Verfahrens erlaubt.

Zur Lösung der voranstehend genannten Aufgabe wird ein Verfahren für eine Zielstrom-Modulation eines modularen Multilevelumrichters vorgeschlagen, bei dem der modulare Multilevelumrichter eine Mehrzahl von Modulen aufweist und von einer Steuerung gesteuert wird. Jedes Modul der Mehrzahl von Modulen weist mindestens zwei steuerbare Schalter und mindestens einen Energiespeicher auf. Durch Aneinanderreihung der Module wird mindestens ein Strang gebildet. Durch den mindestens einen Strang wird eine jeweilige Phase für eine elektrische Last gebildet. Durch die Steuerung wird zu jedem Schalttakt ein jeweiliger Schaltbefehl, welcher alle einzustellenden Schaltzustände der Module umfasst, bereitgestellt und an die Mehrzahl von Modulen übermittelt. Durch den jeweiligen Schaltbefehl stellt sich ein jeweiliger Strom in dem jeweiligen Modul der Mehrzahl von Modulen ein, wobei dem Schaltbefehl ein zu realisierender Zielstrom vorgegeben wird, wobei der jeweilige Zielstrom durch die Steuerung basierend auf einer Sollstromvorgabe berechnet wird, indem

- von einer Regelung taktsynchron zu einem Schalttakt des modularen Multilevelumrichters die Sollstromvorgabe als Sollspannungslevel für die mindestens eine Phase und ein Phasenwinkel bereitgestellt werden und von der Steuerung verlustminimale Idealströme zu einer Idealstromaufteilung berechnet werden,
- zusätzlich zu der Sollstromvorgabe ein Ladezustand für jedes Modul herangezogen wird und daraus für einen Ladezustandsausgleich innerhalb der Mehrzahl an Modulen lastbasierte Offsetströme zu einer Offsetstromaufteilung bzw. Offsetstromfestlegung berechnet werden,
- Idealstromaufteilung und Offsetstromfestlegung aufsummiert und mittels vorgegebener Sättigungswerte begrenzt werden, wodurch die jeweiligen Zielströme in einer Zielstromaufteilung gebildet werden,

und wobei mittels einer Kostenfunktion diejenigen Schaltzustände der Mehrzahl an Modulen, welche die Zielstromaufteilung mit einer geringsten Abweichung realisieren, bestimmt werden und damit der jeweilige Schaltbefehl pro Schalttakt gebildet wird.

Bei der elektrischen Last kann es sich sowohl um eine elektrische Maschine, bspw. eine Traktionsmaschine eines Elektrofahrzeugs, als auch um ein Stromnetz, bspw. um ein Drehstromnetz, handeln. Der sich in den jeweiligen Modulen aufgrund des jeweiligen Schaltzustandes einstellende Strom ist von der Last abhängig.

Falls es der Steuerung nicht möglich ist, ein den kompletten Multilevelkonverter umschließendes System in Echtzeit zu berechnen, bspw. weil eine verwendete Recheneinheit ein zu geringe Rechenleistung aufweist, werden in einer vorteilhaften Ausführungsform des erfindungsgemäßen Verfahrens vor Inbetriebnahme der Steuerung für jede Kombination aus mindestens einem Sollspannungslevel und einem Phasenwinkel alle möglichen Schaltzustände, welche die jeweilige Kombination realisieren, eruiert, jeweilig zu erwartende ohmsche Verluste berechnet und nur Schaltzustände mit minimalen Verlusten zu der jeweiligen Kombination in einem Kennfeld abgespeichert. Der Phasenwinkel ergibt sich dabei aus der der Regelung aktuell vorliegenden Messungen der in der elektrischen Last, bspw. der Traktionsmaschine, fließenden Phasenströme. Um Ressourcen zu sparen genügt es, unter Ausnutzung von Symmetrien jeweilige Schaltzustände nur für eine Phase und einen Winkelbereich von 0° bis 90° zu berechnen. Ein kompletter Verlauf kann dann durch vertikales Spiegeln bzw. horizontales Spiegeln mit anschließender Verschiebung um 180° gewonnen werden. Denkbar ist aber auch, über einen gesamten Winkelbereich von 0° bis 360° abzuspeichern.

Das Kennfeld weist eine Zahl an Dimensionen auf, welche der Zahl an Phasen plus einer Dimension für den Phasenwinkel entspricht. Bei einem für eine Traktionsmaschine gewöhnlich benötigten Drehstrom liegen drei Phasen und dementsprechend ein vierdimensionales Kennfeld vor. Das Kennfeld kann auch als Lookup-Tabelle, abgekürzt LUT, bezeichnet werden.

In einer Ausführungsform des erfindungsgemäßen Verfahrens werden die Sättigungswerte bzw. Grenzwerte zu zahlenmäßig größeren Werten hin durch technische Obergrenzen beschränkt, wodurch das jeweilige Modul bzw. der Energiespeicher des jeweiligen Moduls nicht überlastet wird. Zu zahlenmäßig kleineren Werten hin werden die Sättigungswerte auf den Nullwert begrenzt, wodurch die jeweiligen Module nur entlastet werden können, da Schaltzustände, welche zu einer Aufladung führen würden, von der Kostenfunktion bestraft werden. Anhand einer Strombelastbarkeit der Energiespeicher (Laden/Entladen) erfolgt eine Begrenzung zu einem minimalen Stromwert $i_{min}$ und einem maximalen Stromwert $i_{max}$ der Zielströme $i_{target}$.

In einer anderen Ausführungsform des erfindungsgemäßen Verfahrens werden bei der Berechnung des jeweiligen Zielstromes zusätzlich bei einem Vorliegen eines rekuperativen Zustands negative Werte zugelassen. Dadurch werden die Module auf Grundlage einer Abschätzung einer elektrischen Leistung der elektrischen Maschine gezielt aufgeladen. Dabei basiert die Abschätzung auf einer gemessenen Maschinendrehzahl und der Sollstromvorgabe. Durch eine solche Rekuperationserkennung wird die Zielstromaufteilung in Abhängigkeit eines aktuell vorliegenden rekuperativen Zustands begrenzt.

In einer weiteren Ausführungsform des erfindungsgemäßen Verfahrens werden die Sättigungswerte im laufenden Betrieb dynamisch angepasst.

In einer noch weiteren Ausführungsform des erfindungsgemäßen Verfahrens wird bei der Berechnung des jeweiligen Zielstromes zusätzlich ein Gleichtaktspannungslevel, Englisch als "common mode voltage" (CMV) bezeichnet, aufgeprägt.

Während im Stand der Technik eine CMV oftmals durch eine Harmonische einer elektrischen Grundschwingung (in Phase mit einer Phasenspannung oder einem Phasenstrom) gebildet wird und für gewöhnlich Teil einer Modulation ist, um einen Aussteuerbereich zu vergrößern, kennt das erfindungsgemäße Verfahren eine so definierte CMV nicht und ist bei der Aufprägung des Gleichspannungslevels technisch nicht an eine Schwingungsform gebunden. Vielmehr werden bei der erfindungsgemäßen Berechnung der Idealstromaufteilung für ein gefordertes Sollspannungslevel auch Kombinationen mit möglichen zusätzlichen Gleichtaktspannungsleveln berücksichtigt, ohne den Aussteuerbereich zu limitieren.

In einer noch weiter fortgesetzten Ausführungsform des erfindungsgemäßen Verfahrens werden bei der Kostenfunktion bei allen Schaltzuständen alle aufprägbaren Gleichtaktspannungslevel mitberücksichtigt.

In einer fortgesetzten Ausführungsform des erfindungsgemäßen Verfahrens werden direkt die Zielströme der jeweiligen Module vorgegeben.

In einer fortgesetzt weiteren Ausführungsform des erfindungsgemäßen Verfahrens werden alle möglichen Zielströme zu einem Schalttakt, welcher dem aktuellen Schalttakt nachfolgt, berechnet und in der Kostenfunktion mitberücksichtigt. Damit sind vorteilhaft weitere die ohmschen Verluste reduzierende Maßnahmen möglich. So kann bspw. eine Verschiebung eines Sternpunktes den Aussteuergrad einer Phase verkleinern, wodurch mehr Module parallel verschaltet werden können. Fließt in dieser Phase gerade ein hoher Strom, so ergeben sich daraus vorteilhaft geringere ohmsche Verluste.

In einer fortgesetzt noch weiteren Ausführungsform des erfindungsgemäßen Verfahrens werden bei im Kennfeld gespeicherten gleichwertigen Schaltzuständen mit sich gleichenden minimalen Verlusten ein Mittelwert der damit einhergehenden Modulströme berechnet oder eine willkürliche Auswahl eines dieser gleichwertigen Schaltzustände getroffen.

In einer weiter fortgesetzten Ausführungsform des erfindungsgemäßen Verfahrens wird auf Grundlage einer Sollstromvorgabe, welche durch eine Phasen- bzw. Netzstrom-Vorgabe vorgegeben wird, das Sollspannungslevel durch eine PI-Regelung und einer anschließenden Delta-Sigma-Modulation gebildet. Das erfindungsgemäße Verfahren ist darüber hinaus in der Lage, mit jeglicher Regler/Modulator-Kombination ausgeführt zu werden, solange als Eingangsgröße eine Sollspannung vorliegt.

Das erfindungsgemäße Verfahren ist auf einem modularen Multilevelumrichter mit mindestens einer Phase ausführbar. Im Folgenden wird ohne Einschränkung anderer Möglichkeiten der Ausführung auf Multilevelumrichtern bzw.

Multilevelumrichtern anderen Typs ein modularer Multilevel-Seriell-Parallel-Umrichter, abgekürzt MMSPC, mit drei Strängen und entsprechend drei Phasen betrachtet. Eine komplette formale MMSPC-Beschreibung findet sich in "Optimizing Utilization of an MMSPC with Model Predictive Control", T. Merz, C. Korte, E. Specht, M. Hiller, 2020, IEEE 21st Workshop on Control and Modeling for Power Electronics (COMPEL): Aalborg, Denmark, November 9-12, 2020, At.Nr. 9265803, Institute of Electrical and Electronics Engineers (IEEE); doi:10.1109/COMPEL49091.2020.9265803. Mit Hilfe dieser Beschreibung können anhand von systeminhärenten Widerständen, Phasenströmen und Spannungsleveln resultierende Modulströme für alle Schaltmöglichkeiten während einem laufenden Betrieb berechnet werden, oder, bei zu geringer Rechenleistung der Steuerung, auch vorausberechnet werden. Dies wird zur Erstellung des Kennfeldes herangezogen.

Basierend auf einer exakten Netzwerkanalyse des betrachteten modularen Multilevelumrichters, wie bspw. durch die voranstehend zitierte MMSPC-Beschreibung, und der dadurch bereitstellbaren Kennfelder mit verlustminimierten Schaltzuständen, bewirkt das erfindungsgemäße Verfahren zu jedem Schalttakt des Multilevelumrichters eine effizienzoptimierte Zielstromvorgabe mit gleichzeitig aktivem Ausgleich der Ladezustände der Energiespeicher in den Modulen. Zusätzlich ist es möglich, unter Ausnutzung der Aufprägung von Gleichspannungsleveln auch einen phasenübergreifenden Ladezustandsausgleich durchzuführen und die Effizienz zu erhöhen, in dem der Aussteuergrad in Phasen mit hoher Stromamplitude zusammen mit den damit verbundenen ohmschen Verlusten reduziert wird.

Das erfindungsgemäße Verfahren wird bspw. auf einer Signalverarbeitungsebene des MMSPC implementiert und zwischen der Regelung und einem Bussystem zur Übermittlung des jeweiligen Schaltbefehls an die Module des MMSPCs ausgeführt. Es befindet sich damit zwischen einem Modulator (Bereitstellung Sollspannungslevel) und dem MMSPC als Stellglied. Als Eingangsgrößen werden diskrete Sollspannungslevel $lvl_{out,uvw}$ je Phase (U, V, W) auf Grundlage der Sollströme bzw. d/q-Sollströme ($i_{d,sp}$, $i_{q,sp}$), aktuell gemessene Phasenströme $i_{ph,uvw}$, eine Motordrehzahl $n$ und aktuelle Ladezustände $SoC$ der einzelnen Module benötigt bzw. von der Regelung bereitgestellt. Intern arbeitet das erfindungsgemäße Verfahren mit jeweiligen auf die einzelnen Module bezogenen Zielströmen (engl. target currents) als Rechnungsgrößen. Als Ausgabegröße dient ein Schaltvektor $\vec{s}$ mit den Schaltbefehlen ($s_1$, $s_2$, $s_3$) der drei Phasen. Einen Einfluss auf Vorgaben von Phase-Phase-Spannungen am Ausgang des Umrichters hat das erfindungsgemäße Verfahren jedoch nicht. Es besteht somit kein Eingriff in die eigentliche Maschinenregelung.

Zu jedem Schalttakt wird anhand der geforderten diskreten Sollspannungslevel $lvl_{out,uvw}$ und der anhand des Phasenwinkel ableitbaren aktuellen Zusammensetzung der Phasenströme $i_{ph,uvw}$ eine optimale Idealstromaufteilung $i_{effizienz}$ bestimmt:

$$i_{\text{effizienz}} = f_{i,\text{effizienz}}(lvl_{\text{out,uvw}}, i_{\text{ph,uvw}}) \qquad (1)$$

Dabei wird auf minimale ohmsche Verluste sowohl in den Schaltern bzw. Halbleiterschaltern als auch den Energiespeichern hin optimiert. Hierbei werden alle Freiheitsgrade insbesondere einer Nullspannung ausgenutzt. Die ohmschen Verluste $P_{v,R}$ berechnen sich nach

$$P_{v,R} = R_{ph,u}\, i_{ph,u}^2 + R_{ph,v}\, i_{ph,v}^2 + R_{ph,w}\, i_{ph,w}^2 \qquad (2)$$

aus Ersatzwiderständen in dem Strang mit jeweiliger Phase $R_{ph}$ sowie den jeweiligen Phasenströmen $i_{ph,uvw}$. Bei Gleichung (2) gilt die Annahme, dass die einzelnen Energiespeicher einen identischen Ladezustand aufweisen und somit bei einem Parallelschalten keine Ausgleichströme fließen. Ausgleichströme belasten die Batterien zusätzlich und führen somit zu weiteren Verlusten.

Die Idealstromaufteilung wird bspw. in Gleichung (1) dadurch eruiert, indem die anfallenden ohmschen Verluste bei Realisierung möglicher Schaltvektoren $\vec{s}$ für alle nachfolgenden Spannungslevel mittels Gleichung (2) vorausberechnet werden und unter diesen dann die Schaltvektoren mit den minimalen ohmschen Verlusten ausgewählt werden. Oft finden sich dabei mehrere Schaltkombinationen, welche rechnerisch die gleichen bzw. annähernd gleichen minimalen Verluste mit sich bringen. Für die Idealstromaufteilung $i_{effizienz}$ werden dann bspw. die Mittelwerte der jeweiligen Modulströme anhand von Permutationen möglicher Schaltvektoren mit minimalen Verlusten berechnet.

Ziel der Offsetstromfestlegung ist, die Ladezustände der Energiespeicher der Module aneinander aktiv anzugleichen, auch als Englisch Balancing bezeichnet, wodurch vorteilhaft eine gleichmäßige Entladung, dementsprechend eine gleichmäßige Belastung der Energiespeicher und damit letztlich deren höhere Lebensdauer und Energieausnutzung bewirkt wird. Verfolgt wird dieses Ziel dadurch, weniger geladene Energiespeicher zu entlasten und stärker geladene Energiespeicher stärker zu belasten. Die Be- oder Entlastung wird über die Offsetströme $i_{offset}$ abgebildet. Ein positiver Offsetstrom begünstigt Schaltzustände, welche die Belastung der entsprechenden Energiespeicher erhöhen, während ein negativer Offsetstrom Schaltzustände begünstigt, welche die Belastung reduzieren. Im folgenden Verfahrensschritt des erfindungsgemäßen Verfahrens werden Effizienzströme der Idealstromaufteilung $i_{effizienz}$ dann mit den Offsetströmen $i_{offset}$ in einem Zielstromberechnungsschritt, Englisch als "Target Current Calculation"-(TCC)-Block bezeichnet, kombiniert.

Denkbar ist aber auch, dass alternativ oder zusätzlich zu dem Ziel eines Ausgleichs von Ladezuständen als ein weiteres Ziel eine gleichmäßige thermische Belastung angestrebt wird, bspw. an Hand einer in den jeweiligen Modulen gemessenen Temperatur. Auch ist bei der Entlastung eines Moduls eine Vorgabe des diesbezüglichen Zielstroms von 0 A denkbar, anstatt einen nur im Vergleich mit Zielströmen in anderen Modulen geringeren Wert zu wählen. Sollte ein (betragsmäßig kleiner) Rippelstrom gewünscht sein, wird dieser durch Steuerung eines Wechselanteils jeweiliger Offsetströme erhalten. Im Fall kleiner Rippelströme kann auch der Modulstrom aus dem vorangegangenen Modulationsschritt als Zielstrom verwendet werden. Weiter ist auch denkbar, als Kriterien für die Offsetstromfestlegung einen "State-of-Energy" (SoE) oder einen "State-of-Health" (SoH) heranzuziehen.

Mathematisch lässt sich die zusätzliche Be- oder Entlastung bspw. durch einen P-Regler abbilden, welcher formal als

$$u(t) = K_p \cdot e_{pm}(t) \qquad\qquad (3)$$

beschrieben wird. Dabei ist $e_{pm}(t)$ ein Fehler zum Schaltzeitpunkt $t$, welcher eine jeweilige Abweichung des $SoC$ vom arithmetischen Mittel aller Ladezustände $\overline{SoC}$ darstellt.

$$e_{pm} = SoC_{pm} - \overline{SoC} \quad , \qquad\qquad (4)$$

wobei Index $p$ und Index $m$ ein jeweiliges Modul im Strang $p$ an Position $m$ bezeichnet. Das arithmetische Mittel aller Ladezustände $\overline{SoC}$ berechnet sich aus

$$\overline{SoC} = \frac{1}{3n_{\text{ph}}} \sum_{p=1}^{3} \sum_{m=1}^{n_{\text{ph}}} SoC_{pm} \quad , \qquad\qquad (5)$$

wobei $n_{\text{ph}}$ eine Zahl von Modulen im jeweiligen Strang $p$ darstellt. Um einen Wertebereich bei einer Implementierung klein zu halten, wird eine dynamische Verstärkung, vergleichbar mit einer Normierung eingesetzt. Es erfolgt eine Division durch eine mittlere absolute Abweichung vom arithmetischen Mittel aller Ladezustände $d_{\overline{SoC}}(SoC)$,

$$d_{\overline{SoC}}(SoC) = \frac{1}{3n_{\text{ph}}} \sum_{p=1}^{3} \sum_{m=1}^{n_{\text{ph}}} \left| SoC_{pm} - \overline{SoC} \right| \quad . \qquad\qquad (6)$$

Um eine Division durch Null zu verhindern, wird ein Faktor $a$ mit einem Grenzwert $a_{\text{lim}}$ eingeführt:

$$a = \begin{cases} d_{\overline{SoC}}(SoC) & , \text{für } d_{\overline{SoC}}(SoC) > a_{lim} \\ a_{lim} & , \text{für } d_{\overline{SoC}}(SoC) \leq a_{lim} \end{cases} \quad . \qquad\qquad (7)$$

Der Faktor $a$ relativiert die Abweichung der SoCs und nutzt hierfür die mittlere absolute Abweichung vom arithmetischen Mittel. Gleichzeitig kann über den Grenzwert $a_{\text{lim}}$ eingestellt werden, ab wann die Ladezustände ausreichend angeglichen sind und der Einfluss des Balancing reduziert wird.

Um nun aus der auf diese Weise erhaltenen normierten Abweichung wiederum einen Strom bzw. Offsetstrom zu erhalten, erfolgt eine Multiplikation mit einer Zeigerlänge des Sollstromzeigers in d/q-Koordinaten, woraus sich eine vollständige Berechnung des Offsetstroms $i_{offset,pm}$ ergibt:

$$i_{\text{offset},pm} = \frac{1}{a} \cdot \left(SoC_{pm} - \overline{SoC}\right) \frac{\sqrt{i_{q,\text{soll}}^2 + i_{d,\text{soll}}^2}}{G_{\text{bal}}} \quad . \tag{8}$$

Der Faktor $G_{\text{bal}}$ im Nenner bestimmt eine Stärke bzw. eine Aggressivität des Balancings. Je kleiner der Faktor, desto dominanter wird das Balancing im Vergleich zur Effizienzoptimierung. Durch heuristische Experimente ergaben sich bei einem System mit drei Phasen, $p$=3, und je fünf Modulen, $n_{\text{ph}}$=5, für einen Wert von $G_{\text{bal}}$ =4 die besten Ergebnisse.

Da der Offsetstrom mittels der voranstehenden Gleichungen berechnet wird, spricht man bei der Offsetstromfestlegung auch von einer Offsetstromdefinition.

Erfindungsgemäß wird bei der Rekuperationserkennung überprüft, ob in einem aktuellen Arbeitspunkt generatorisch gebremst und dabei auch Energie zurückgewonnen werden kann. Dazu wird anhand von Maschinengleichungen, aus der gemessenen Drehzahl $n$ und den d/q-Sollströmen $i_{d,sp}$, $i_{q,sp}$ eine elektrische Leistung $P_{\text{Motor,e1}}$ der elektrischen Maschine unter Beachtung der ohmschen Verluste in den Motorwicklungen abgeschätzt. Ist die elektrische Leistung $P_{\text{Motor,e1}}$ negativ, wird von einem rekuperativen Arbeitspunkt ausgegangen. Diese binäre Information ($P_{\text{Motor,e1}}$ negativ ja/nein) wird dann in dem TCC-Block verarbeitet, so dass bspw. in einem motorischen Betrieb stärker entladene Energiespeicher durch Entlastung an weniger stark entladene Energiespeicher angeglichen werden. Nur in einem rückspeisenden bzw. rekuperativen Betrieb der elektrischen Maschine werden die Energiespeicher gezielt aufgeladen. Liegt keine Rekuperation vor, werden die Zielströme nach unten auf 0 A begrenzt und aktives Laden wird vermieden, um vorteilhaft unnötige ohmsche Verluste beim aktiven Umladen der Energiespeicher zu vermeiden.

Die Zielströme $i_{\text{target}}$ werden aus den Eingangsgrößen zum TCC-Block bestimmt. Erfindungsgemäß werden Idealstromaufteilung und Offsetstromfestlegung aufsummiert und dann mittels einer variablen Sättigung begrenzt. Variable Sättigung bedeutet in diesem Kontext, dass die jeweils gültigen Grenzwerte variabel sind und im Betrieb entsprechend angepasst werden. Solche Grenzen sind insbesondere vom Zustand des Energiespeichers, also Temperatur und Ladezustand (SoC), abhängige, maximale Lade- und Entladeströme.

Zusätzlich zu der dynamischen Unterscheidung kommen feste Grenzen $i_{\text{min}}$ und $i_{\text{max}}$ entsprechend einer Stromtragfähigkeit der Energiespeicher hinzu. Die Begrenzung der Zielströme $i_{\text{target}}$ erfolgt zum Schutz der Energiespeicher, wobei sowohl Entlade- als auch Ladeströme begrenzt werden. Tatsächlich fließende Modulströme können jedoch trotz dieser Begrenzung betragsmäßig größer ausfallen, da die Umsetzung der Zielströme anhand der Kostenfunktion erfolgt. Typischerweise ist die Grenze der Ladeströme betragsmäßig geringer, als das jeweilige Modul laut technischer Angaben, bspw. gemäß einem Datenblatt, zulässt. Eine variable Begrenzung der Ladeströme, in Abhängigkeit vom aktuellen SoC, ist ebenso denkbar. Dabei könnte eine Dynamic Charge Acceptance, abgekürzt DCA, der Energiespeicher beachtet werden. Die DCA beschreibt in Relation zur Speicherkapazität inwieweit ein Energiespeicher in der Lage ist, elektrische Ladung aufzunehmen. Dies ist von Temperatur, dem aktuellen Ladezustand aber auch einer Belastungshistorie des Energiespeichers abhängig.

Mittels der Kostenfunktion wird derjenige Schaltvektor $\vec{s}$, welcher die Zielströme am besten realisieren kann, ausgewählt und anschließend ausgegeben. Dazu werden anhand eines modellprädiktiven Ansatzes, bspw. aus voranstehend zitierter MMSPC-Beschreibung entnommen, für eine Auswahl an möglichen Folgezuständen auf den aktuellen Schaltzustand die Modulströme $i_{\text{mod},pm}$ vorausberechnet und entsprechende Werte der Kostenfunktion J als eine quadratische Abweichung von den Zielströmen $i_{\text{target}}$ bestimmt:

$$J = \sum_{p=1}^{3} \sum_{m=1}^{n_{ph}} \left(i_{target,pm} - i_{mod,pm}\right)^2 \quad . \tag{9}$$

Am besten werden jeweilige Zielströme $i_{\text{target}}$ durch den Schaltvektor $\vec{s}$ mit einem kleinsten Wert J in Gleichung (9) realisiert, worauf dieser Schaltvektor $\vec{s}$ an die jeweiligen Module übermittelt wird. Während des Betriebes führt das erfindungsgemäße Verfahren vorteilhaft zu einem Angleichen der Ladezustände bei gleichzeitig effizientem Betrieb des Umrichters. Wenn die Ladezustände komplett angeglichen sind, dann ist die Effizienzoptimierung dominant und Verluste werden minimiert.

Alternativ ist denkbar, anstatt Fehlerquadrate in Gleichung (9) zu bilden, mittels einem Delta-Sigma-Verfahren über Abweichung zwischen umgesetzten Istströmen und den Zielströmen aufzuintegrieren und zum nächsten Schalttakt zu berücksichtigen.

$$i_{DS,pm} = i_{\text{target},pm} - i_{\text{mod,opt},pm} \quad . \tag{10}$$

Erfindungsgemäß findet eine Vorausberechnung von Modulströmen in Echtzeit bzw. zu jedem Schalttakt des Multilevelumrichters statt.

Ferner wird ein System für eine Zielstrom-Modulation eines modularen Multilevelumrichters beansprucht, bei dem das System eine elektrische Last, eine Maschinenregelung, einen modularen Multilevelumrichter mit einer Mehrzahl von Modulen und mit einer Steuerung umfasst, wobei jedes Modul der Mehrzahl von Modulen mindestens zwei steuerbare Schalter und mindestens einen Energiespeicher aufweist, wobei durch Aneinanderreihung der Module mindestens ein Strang gebildet ist und durch den mindestens einen Strang eine jeweilige Phase für die elektrische Last gebildet ist, wobei die Steuerung dazu konfiguriert ist, zu jedem Schalttakt einen jeweiligen Schaltbefehl, welcher alle einzustellenden Schaltzustände der Module umfasst und sich dadurch ein jeweiliger Strom in dem jeweiligen Modul der Mehrzahl von Modulen einstellt, wobei dem Schaltbefehl ein zu realisierender Zielstrom vorgegeben ist, bereitzustellen und an die Mehrzahl von Modulen zu übermitteln, und dazu

- den jeweiligen Zielstrom basierend auf einer Sollstromvorgabe zu berechnen, indem

  • von der Regelung taktsynchron zu einem Schalttakt des modularen Multilevelumrichters die Sollstromvorgabe als Sollspannungslevel für die mindestens eine Phase und ein Phasenwinkel bereitgestellt werden und von der Steuerung verlustminimale Idealströme zu einer Idealstromaufteilung berechnet werden,
  • zusätzlich zu der Sollstromvorgabe ein Ladezustand für jedes Modul herangezogen wird und daraus für einen Ladezustandsausgleich innerhalb der Mehrzahl an Modulen lastbasierte Offsetströme zu einer Offsetstromfestlegung berechnet werden,
  • Idealstromaufteilung und Offsetstromfestlegung aufsummiert und mittels vorgegebener Sättigungswerte begrenzt werden, wodurch die jeweiligen Zielströme in einer Zielstromaufteilung gebildet werden,

- und mittels einer Kostenfunktion diejenigen Schaltzustände der Mehrzahl an Modulen, welche die Zielstromaufteilung mit einer geringsten Abweichung realisieren, zu bestimmen und damit den jeweiligen Schaltbefehl pro Schalttakt zu bilden.

In einer Ausgestaltung des erfindungsgemäßen Systems ist das System dazu konfiguriert, ein erfindungsgemäßes Verfahren auszuführen.

Weitere Vorteile und Ausgestaltungen der Erfindung ergeben sich aus der Beschreibung und der beiliegenden Zeichnung.

Es versteht sich, dass die voranstehend genannten Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Figuren werden zusammenhängend und übergreifend beschrieben, gleichen Komponenten sind dieselben Bezugszeichen zugeordnet.

Figur 1 zeigt ein Ablaufschema zur Zielstrommodulation in einer Ausführungsform des erfindungsgemäßen Verfahrens.

Figur 2 zeigt ein Berechnungsschema zur Zielstrommodulation in der Ausführungsform des erfindungsgemäßen Verfahrens.

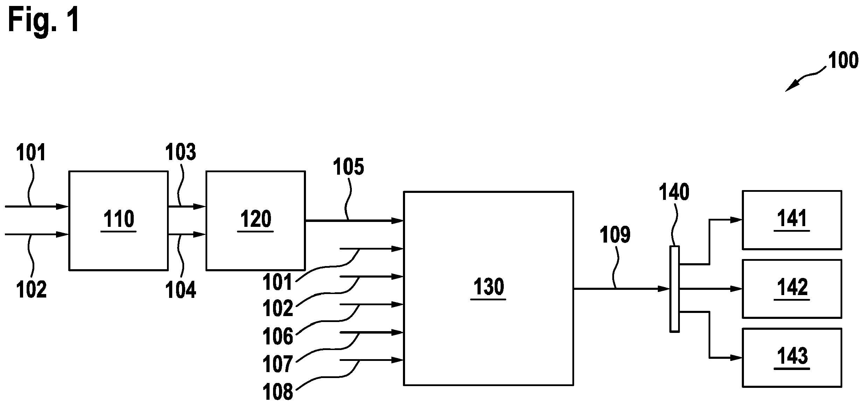

In Figur 1 wird ein Ablaufschema 100 zur Zielstrommodulation 130 in einer Ausführungsform des erfindungsgemäßen Verfahrens gezeigt. Für jedes MMSPC-Modul in einem Strang mit Phase U 141, Phase V 142 und Phase W 143 wird in einer Zielstrommodulation 130 ein Zielstrom $i_{target}$ berechnet. Die Zielstrommodulation 130 ist auf Signalflussebene hinter einer Regelung mit einem PI-Regler 110 und einem Delta-Sigma-Modulator 120 und vor einem Bus zur Schaltbefehlverteilung 140 angeordnet. Zunächst werden eine q-Komponente Sollstrom $i_{q,soll}$ 101 und eine d-Komponente Sollstrom $i_{d,soll}$ 102 mittels des PI-Reglers 110 zu einer q-Komponente Sollspannung $u_q$ 103 und einer d-Komponente Sollspannung $u_d$ 104 umgewandelt und anschließend mittels des Delta-Sigma-Modulators 120 als ein Sollspannungslevel $lvl_{out,uvw}$ (bezeichnet $lvl_{out,u}$, $lvl_{out,v}$, $lvl_{out,w}$)105 der Zielstrommodulation 130 zugeführt. Weitere Eingangsgrößen zur Zielstrommodulation 130 sind ebenfalls die q-Komponente Sollstrom $i_{q,soll}$ 101 und d-Komponente Sollstrom $i_{d,soll}$ 102, Phasenströme $i_{ph,uvw}$ 106, (Rotor-)Drehzahl $n$ 107, und alle Ladezustände $SoCs$ 108 der Energiespeicher. Als Ausgangsgröße stellt die Zielstrommodulation 130 einen Schaltbefehl 109 bereit.

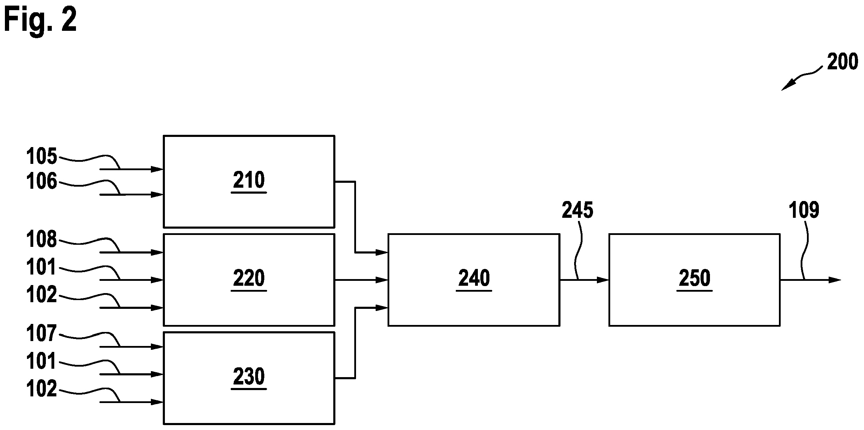

In Figur 2 wird ein Berechnungsschema 200 zur Zielstrommodulation in der Ausführungsform des erfindungsgemäßen Verfahrens gezeigt. Eine Modulation des Zielstromes $i_{target}$ setzt sich aus einer Idealstromaufteilung 210, einer Offsetstromfestlegung 220, und einer Rekuperationserkennung 230 zusammen. Der Ausgangspunkt ist dabei immer die maximale Effizienz. Zu jedem Zeitpunkt wird bei der Idealstromaufteilung 210 mit Eingangsgrößen Sollspannungslevel $lvl_{out,uvw}$ 105 und Phasenströme $i_{ph,uvw}$ 106 eine aus Sicht der Effizienz optimale Idealstromaufteilung 210 $i_{effizienz}$ über alle Module bestimmt und einer Berechnung der Zielstromaufteilung 240, Englisch "Target Current Calculation" (TCC), zugeführt. Bei dieser Idealstromaufteilung fallen die geringsten ohmschen Verluste im Umrichter und den Energiespeichern an. Zum Ausgleich von Ladezuständen dient die Berechnung der Offsetstromfestlegung 220 mit den Eingangsgrößen Ladezustände $SoCs$ 108, q-Komponente Sollstrom $i_{q,soll}$ 101 und der d-Komponente Sollstrom $i_{d,soll}$ 102. Die daraus gewonnene Offsetstromverteilung 220 $i_{offset}$ wird ebenfalls der Berechnung der Zielstromaufteilung 240 zugeführt. Je nachdem ob ein jeweiliger Offsetstrom positiv oder negativ ist, kann eine Belastung der einzelnen Batteriezellen erhöht oder verringert werden. Die Rekuperationserkennung 230 bestimmt aus den Eingangsgrößen Drehzahl $n$ 107, q-Komponente Sollstrom $i_{q,soll}$ 101 und d-Komponente Sollstrom $i_{d,soll}$ 102, ob im aktuellen Arbeitspunkt rekuperativ gebremst wird, und leitet diese Information an die Berechnung der Zielstromaufteilung 240 weiter, was dort dazu führt, dass jeweilige negative Offsetströme ohne vorliegende Rekuperation auf den Nullwert gesetzt werden. Bei der Berechnung der Zielstromaufteilung 240 wird aus $i_{effizienz}$ und $i_{offset}$ der Zielstrom $i_{target}$ bzw. die Zielstromaufteilung 245 erzeugt. Schließlich wird mittels einer Kostenfunktion 250 ein Schaltvektor $\vec{s}$, welcher die angestrebten Zielströme am besten realisieren kann, bestimmt und als Schaltbefehl 109 ausgegeben.

**Bezugszeichenliste**

| | |
|---|---|
| 100 | Ablaufschema zur Zielstrommodulation |
| 101 | q-Komponente Sollstrom $i_{q,soll}$ |
| 102 | d-Komponente Sollstrom $i_{d,soll}$ |
| 103 | q-Komponente Sollspannung $u_q$ |
| 104 | d-Komponente Sollspannung $u_d$ |
| 105 | Sollspannungslevel $lvl_{out,uvw}$ |
| 106 | Phasenströme $i_{ph,uvw}$ |
| 107 | Drehzahl $n$ |
| 108 | Ladezustände $SoCs$ |
| 109 | Schaltbefehl |
| 110 | PI-Regler |
| 120 | Modulator |
| 130 | Zielstrommodulation |
| 140 | Schaltbefehlverteilung |
| 141 | Multilevelumrichter Strang für Phase U |
| 142 | Multilevelumrichter Strang für Phase V |
| 143 | Multilevelumrichter Strang für Phase W |
| 200 | Schema Zielstrommodulation |
| 210 | Idealstromaufteilung |
| 220 | Offsetstromfestlegung |
| 230 | Rekuperationserkennung |
| 240 | Zielstromaufteilung |
| 245 | Zielstrom |
| 250 | Kostenfunktion |

**Patentansprüche**

1.  Verfahren für eine Zielstrom-Modulation eines modularen Multilevelumrichters, bei dem der modulare Multilevelumrichter eine Mehrzahl von Modulen aufweist und von einer Steuerung gesteuert wird, bei dem jedes Modul der Mehrzahl von Modulen mindestens zwei steuerbare Schalter und mindestens einen Energiespeicher aufweist, wobei durch Aneinanderreihung der Module mindestens ein Strang (141, 142, 143) gebildet wird und durch den mindestens einen Strang (141, 142, 143) eine jeweilige Phase für eine elektrische Last gebildet wird, wobei durch die Steuerung zu jedem Schalttakt ein jeweiliger Schaltbefehl (109), welcher alle einzustellenden Schaltzustände der Module umfasst, bereitgestellt und an die Mehrzahl von Modulen übermittelt wird, wobei sich durch den jeweiligen Schaltbefehl (109) ein jeweiliger Strom in dem jeweiligen Modul der Mehrzahl von Modulen einstellt, wobei dem Schaltbefehl ein zu realisierender Zielstrom (245) vorgegeben wird, wobei der jeweilige Zielstrom (245) durch die Steuerung basierend auf einer Sollstromvorgabe (101, 102) berechnet wird, indem

- von einer Regelung taktsynchron zu einem Schalttakt des modularen Multilevelumrichters die Sollstromvorgabe (101, 102) als Sollspannungslevel (105) für die mindestens eine Phase und ein Phasenwinkel bereitgestellt werden und von der Steuerung verlustminimale Idealströme zu einer Idealstromaufteilung (210) berechnet werden,
- zusätzlich zu der Sollstromvorgabe ein Ladezustand für jedes Modul herangezogen wird und daraus für einen Ladezustandsausgleich innerhalb der Mehrzahl an Modulen lastbasierte Offsetströme zu einer Offsetstromfestlegung (220) berechnet werden,
- Idealstromaufteilung (210) und Offsetstromfestlegung (220) aufsummiert und mittels vorgegebener Sättigungswerte begrenzt werden, wodurch die jeweiligen Zielströme (245) in einer Zielstromaufteilung (240) gebildet werden,

und wobei mittels einer Kostenfunktion (250) diejenigen Schaltzustände der Mehrzahl an Modulen, welche die Zielstromaufteilung (240) mit einer geringsten Abweichung realisieren, bestimmt werden und damit der jeweilige Schaltbefehl (109) pro Schalttakt gebildet wird.

2. Verfahren nach Anspruch 1, wobei die Sättigungswerte zu zahlenmäßig größeren Werten hin durch technische Obergrenzen beschränkt werden und zu zahlenmäßig kleineren Werten hin auf den Nullwert begrenzt werden.

3. Verfahren nach einem der voranstehenden Ansprüche, wobei bei der Berechnung des jeweiligen Zielstromes (245) zusätzlich bei einem Vorliegen eines rekuperativen Zustands (230) negative Werte zugelassen werden, wodurch die Module auf Grundlage einer Abschätzung einer elektrischen Leistung der elektrischen Maschine basierend auf einer gemessenen Drehzahl (107) und der Sollstromvorgabe gezielt aufgeladen werden.

4. Verfahren nach einem der voranstehenden Ansprüche, wobei die Sättigungswerte im laufenden Betrieb angepasst werden.

5. Verfahren nach einem der voranstehenden Ansprüche, wobei bei der Berechnung des jeweiligen Zielstromes (245) zusätzlich ein Gleichtaktspannungslevel aufgeprägt wird.

6. Verfahren nach Anspruch 5, wobei bei der Kostenfunktion (250) bei allen Schaltzuständen alle aufprägbaren Gleichtaktspannungslevel mitberücksichtigt werden.

7. Verfahren nach einem der voranstehenden Ansprüche, wobei alle möglichen Zielströme (245) zu einem Schalttakt, welcher dem aktuellen Schalttakt nachfolgt, berechnet werden und in der Kostenfunktion (250) mitberücksichtigt werden.

8. Verfahren nach einem der voranstehenden Ansprüche, wobei bei im Kennfeld gespeicherten gleichwertigen Schaltzuständen mit sich gleichenden minimalen Verlusten ein Mittelwert der damit einhergehenden Modulströme berechnet wird oder eine willkürliche Auswahl eines dieser gleichwertigen Schaltzustände getroffen wird.

9. Verfahren nach einem der voranstehenden Ansprüche, wobei auf Grundlage der Sollstromvorgabe (101, 102) das Sollspannungslevel (105) durch eine PI-Regelung (110) und einer anschließenden Delta-Sigma-Modulation (120) gebildet wird.

10. System für eine Zielstrom-Modulation eines modularen Multilevelumrichters, bei dem das System eine elektrische Last, eine Maschinenregelung, einen modularen Multilevelumrichter mit einer Mehrzahl von Modulen und mit einer Steuerung umfasst, wobei jedes Modul der Mehrzahl von Modulen mindestens zwei steuerbare Schalter und mindestens einen Energiespeicher aufweist, wobei durch Aneinanderreihung der Module mindestens ein Strang (141, 142, 143) gebildet ist und durch den mindestens einen Strang (141, 142, 143) eine jeweilige Phase für die elektrische Last gebildet ist, wobei die Steuerung dazu konfiguriert ist, zu jedem Schalttakt einen jeweiligen Schaltbefehl (109), welcher alle einzustellenden Schaltzustände der Module umfasst und sich dadurch ein jeweiliger Strom in dem jeweiligen Modul der Mehrzahl von Modulen einstellt, wobei dem jeweiligen Schaltbefehl (109) ein zu realisierender Zielstrom (245) vorgegeben ist, bereitzustellen und an die Mehrzahl von Modulen zu übermitteln, und dazu

- den jeweiligen Zielstrom (245) basierend auf einer Sollstromvorgabe zu berechnen, indem

- von der Regelung taktsynchron zu einem Schalttakt des modularen Multilevelumrichters die Sollstromvorgabe (101, 102) als Sollspannungslevel (105) für die mindestens eine Phase und ein Phasenwinkel bereitgestellt werden und von der Steuerung verlustminimale Idealströme zu einer Idealstromaufteilung (210) berechnet werden,
- zusätzlich zu der Sollstromvorgabe ein Ladezustand für jedes Modul herangezogen wird und daraus für einen Ladezustandsausgleich innerhalb der Mehrzahl an Modulen lastbasierte Offsetströme zu einer Offsetstromfestlegung (220) berechnet werden,
- Idealstromaufteilung (210) und Offsetstromfestlegung (220) aufsummiert und mittels vorgegebener Sättigungswerte begrenzt werden, wodurch die jeweiligen Zielströme (245) in einer Zielstromaufteilung (240) gebildet werden,

   ▪ und mittels einer Kostenfunktion (250) diejenigen Schaltzustände der Mehrzahl an Modulen, welche die Zielstromaufteilung (240) mit einer geringsten Abweichung realisieren, bestimmt werden und damit den jeweiligen Schaltbefehl (109) pro Schalttakt zu bilden.

11. System nach Anspruch 10, wobei das System dazu konfiguriert ist, ein Verfahren nach einem der Ansprüche 2 bis 9 auszuführen.

# Fig. 1

# Fig. 2

200

105 →
106 → **210**

108 →
101 → **220**
102 →

107 →
101 → **230**
102 →

**240**  245

**250**  109

EP 4 164 110 A1

**Europäisches Patentamt**
**European Patent Office**
**Office européen des brevets**

# EUROPÄISCHER RECHERCHENBERICHT

Nummer der Anmeldung

**EP 22 02 0422**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | MERZ TOBIAS ET AL: "Optimizing Utilization of an MMSPC with Model Predictive Control", 2020 IEEE 21ST WORKSHOP ON CONTROL AND MODELING FOR POWER ELECTRONICS (COMPEL), IEEE, 9. November 2020 (2020-11-09), Seiten 1-8, XP033866840, DOI: 10.1109/COMPEL49091.2020.9265803 [gefunden am 2020-11-20] * das ganze Dokument * ----- | 1-11 | INV. H02M7/483 |
| X | LI ZHONGXI ET AL: "Predictive control of modular multilevel series/parallel converter for battery systems", 2017 IEEE ENERGY CONVERSION CONGRESS AND EXPOSITION (ECCE), IEEE, 1. Oktober 2017 (2017-10-01), Seiten 5685-5691, XP033247628, DOI: 10.1109/ECCE.2017.8096945 [gefunden am 2017-11-03] * Abbildung 1 * * Zeile bbb, Absätze II,III * ----- | 1,10 | |
| T | MERZ TOBIAS ET AL: "Target Current Modulation as a Novel Approach for Active Balancing in Automotive MMSPCs", 2022 IEEE 23RD WORKSHOP ON CONTROL AND MODELING FOR POWER ELECTRONICS (COMPEL), IEEE, 20. Juni 2022 (2022-06-20), Seiten 1-8, XP034153890, DOI: 10.1109/COMPEL53829.2022.9830002 [gefunden am 2022-07-22] * das ganze Dokument * ----- | | |

**RECHERCHIERTE SACHGEBIETE (IPC)**

H02M

Der vorliegende Recherchenbericht wurde für alle Patentansprüche erstellt

| Recherchenort | Abschlußdatum der Recherche | Prüfer |
|---|---|---|
| Den Haag | 8. Februar 2023 | Gotzig, Bernhard |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.........................................................................
& : Mitglied der gleichen Patentfamilie, übereinstimmendes Dokument

EPO FORM 1503 03.82 (P04C03)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20180109202 A
- DE 102011075429 A1

- DE 102016125720 A1
- US 20210155100 A1

**In der Beschreibung aufgeführte Nicht-Patentliteratur**

- **GOETZ, S.M. ; PETERCHEV, A.V. ; WEYH, T.** Modular Multilevel Converter With Series and Parallel Module Connectivity: Topology and Control. *Power Electronics, IEEE Transactions,* 2015, vol. 30 (1), 203-215

- Optimizing Utilization of an MMSPC with Model Predictive Control. **T. MERZ ; C. KORTE ; E. SPECHT ; M. HILLER.** IEEE 21st Workshop on Control and Modeling for Power Electronics (COMPEL): Aalborg, Denmark. Institute of Electrical and Electronics Engineers (IEEE), 09. November 2020